# EUROPÄISCHE PATENTSCHRIFT

(11) **EP 1 693 815 B1**
(45) Veröffentlichungstag und Bekanntmachung des Hinweises auf die Patenterteilung: **21.01.2009**
(21) Anmeldenummer: 06101376.9
(22) Anmeldetag: 07.02.2006
(51) Int. Cl.: G08G 1/0962, G08G 1/0967, G01C 21/36

(54) **Verfahren zur Eingabe in eine Fahrerinformationsvorrichtung**
Method for providing input into a driver information apparatus
Procédé pour procurer des entrées dans un dispositif d'information d'un conducteur

(30) Priorität: 17.02.2005 DE 102005007316
(43) Veröffentlichungstag der Anmeldung: 23.08.2006
(73) Patentinhaber: ROBERT BOSCH GMBH, 70442 Stuttgart (DE)
(72) Erfinder: Kossira, Martin, 71672 Marbach Am Neckar (DE); Flick, Bernd, 31199 Diekholzen (DE)

(56) Entgegenhaltungen:
- EP-A- 1 030 280
- EP-A1- 1 359 556
- WO-A-02/17268
- DE-A1- 19 703 610

## Beschreibung

Die Erfindung geht aus von einem Verfahren zur Eingabe in eine Fahrerinformationsvorrichtung nach der Gattung des Hauptanspruchs. Es sind schon Fahrerinformationsvorrichtungen bekannt, bei denen Funktionen und Befehle menügesteuert aus einer Liste ausgewählt werden. Z.B. können Fahrziele für eine Navigationsfunktion oder Telefonnummern für eine Telefonfunktion aus entsprechenden Listen ausgewählt werden. Werden dem Fahrer von außerhalb des Fahrzeug Informationen übermittelt, so können diese-nur im Rahmen der übermittelnden Funktion weiterverwendet werden: Ist z.B. ein Mobiltelefon mit der Fahrerinfonnationsvorrichtung verbunden, so kann die Telefonnummer eines Anrufers für einen späteren Rückruf gespeichert werden. Eine Möglichkeit, auf diesem Wege übermittelte Informationen insbesondere in Textform weiter zu verwenden besteht für einen Fahrer dadurch, dass er die übermittelte Textbotschaft abtippt, um sie für andere Funktionen der Fahrerinformationsvorrichtung zu verwenden.

Aus der WO 02/17268 A1 ist ein Verfahren zum Betrieb eines Navigationsgeräts und einer Anordnung zur Durchführung des Verfahrens bekannt, bei dem ein Speichermedium eine digitalisierte Landkarte im Fahrzeug bereithält. Staudaten können über einen TMC-Dienst empfangen werden. Die jeweiligen Staudaten werden unter Berücksichtigung der im Fahrzeug gespeicherten digitalen Karte in einer Anzeige dargestellt. Aus der dargestellten Grafik kann ein Fahrer bestimmte Staus derart auswählen, dass sie akzeptiert und damit für eine weitere Routenplanung berücksichtigt werden.

### Vorteile der Erfindung

Das erfindungsgemäße Verfahren zur Eingabe in eine Fahrerinformationsvorrichtung mit den Merkmalen des Hauptanspruchs hat demgegenüber den Vorteil, dass eine manuelle Eingabe der Information, die weiterverarbeitet werden soll, nicht erforderlich ist. Vielmehr wählt der Fahrer wenigstens einen Teil einer in der Anzeige angegebenen Information aus, die zuvor an das Fahrzeug übermittelt wurde. Der ausgewählte Teil der Nachricht wird als Eingabe für die Fahrerinformationsvorrichtung weiterverarbeitet, ohne dass der Fahrer den ausgewählten Inhalt der Information erneut eingeben muss.
Hierdurch können von außen an das Fahrzeug übermittelte Daten durch den Fahrer zügig zur Weiterverarbeitung durch die Fahrerinformationsvorrichtung eingegeben werden. Eine manuelle Eingabe kann entfallen. Dies ist insbesondere dann vorteilhaft, wenn Dritte, z.B. ein Anbieter von Reiseführer-Informationen, dem Fahrer Informationen zur Verfiigung stellen. Aber auch der Fahrer selbst kann eine erfindungsgemäße Eingabe dann nutzen, wenn ihm außerhalb des Fahrzeugs möglicherweise Eingabemittel zur Verfiigung stehen, wie z.B. ein Computer oder ein Mobilfunktelefon mit einer ergonomischen Tastatur, mit denen im Verhältnis zu Eingabemitteln im Fahrzeug eine einfachere oder bequemere Eingabe von Informationen möglich ist.

Durch die in den Unteransprüchen aufgeführten Maßnahmen sind vorteilhafte Weiterbildungen und Verbesserungen des im Hauptanspruch angegebenen Verfahrens zur Eingabe in eine Fahrerinformationsvorrichtung möglich. Insbesondere Informationen in Textform können auf einfache Weise weiterverarbeitet werden. Besonders vorteilhaft ist es ferner, aus dem ausgewählten Teil der Nachricht einen Ort zu ermitteln. Die Ortsinformation kann z.B. dazu verwendet werden, dem Fahrer weitere Informationen zu diesem Ort anzuzeigen. Hierdurch kann eine Reiseführerfunktionalität gewährleistet werden. Ferner ist es vorteilhaft, die Ortsinformation als Eingabe für ein Navigationssystem, das Teil der Fahrerinformationsvorrichtung ist, zu verwenden. Hierbei wird der Ort als Fahrziel in das Navigationssystem eingegeben, so dass eine Fahrtroute zu dem eingegebenen Ort berechnet werden kann. Die Fahrzieleingabe wird hierdurch vereinfacht.

Um einen Ort einfach identifizieren zu können, ist vorzugsweise eine Adress- und/oder Ortsdatenbank vorgesehen, wobei der ausgewählte Teil der Information mit Einträgen in der Adress- und/oder Ortsdatenbank verglichen wird, um einen zu der Information passenden Eintrag zu finden. Sollte eine eindeutige Identifizierung nicht möglich sein, ist es bevorzugt vorgesehen, auch Zusatzinformationen aus der Nachricht zur weiteren Ortsbestimmung zu verwenden. So können z.B. aus einem übermittelten Namen oder aus einer übermittelten Telefonnummer zusätzliche Informationen für die Identifizierung gewonnen werden.

Bevorzugt wird die Nachricht als SMS-Kurznachricht oder als E-Mail an das Fahrzeug übermittelt. Diese Nachrichtenformate sind allgemein üblich und mit ihnen können insbesondere Textinformationen bequem übermittelt werden.

Eine Auswahl des wenigstens einen Teiles der Nachricht erfolgt vorzugsweise dadurch, dass der auszuwählende Teil der Nachricht zunächst markiert und anschließend bestätigt wird. Hierdurch ist eine Auswahl aus der Nachricht und insbesondere eine bequeme Eingabe für einen Benutzer möglich.

Bevorzugt kann der ausgewählte Teil der Nachricht anschließend noch für weitere Fahrzeugfunktionen verwendet werden. Wird z.B. erst eine Reiseführerinformation zu einem Ort abgerufen, so kann anschließend der Ort als Eingabe für ein Navigationssystem verwendet werden.

### Zeichnung

Ausführungsbeispiele der Erfindung sind in der Zeichnung dargestellt und in der nachfolgenden Beschreibung näher erläutert. Es zeigen
Figur 1 eine Fahrerinformationsvorrichtung zur Durchführung des erfindungsgemäßen Verfahrens,
Figur 2 einen Verfahrensablauf des erfindungsgemäßen Verfahrens.

### Beschreibung des Ausführungsbeispiels

Erfindungsgemäß erfolgt eine Eingabe in eine Fahrerinformationsvorrichtung, wobei eine Nachricht von außerhalb des Fahrzeugs empfangen und in einer Anzeige dargestellt wird. Ein Benutzer kann nun wenigstens einen Teil der in der Anzeige dargestellten Information auswählen, um den ausgewählten Teil der Nachricht als Eingabe für eine Funktion der Fahrerinformationsvorrichtung zu verwenden. Das erfindungsgemäße Verfahren kann hierbei zur Eingabe in beliebige Fahrerinformationsvorrichtungen mit unterschiedlichen Funktionalitäten verwendet werden. Es ist insbesondere für solche Funktionen sinnvoll, die von einem Benutzer eine relativ komplexe Eingabe erfordern, z.B. bei einer Steuerung einer Navigationsvorrichtung oder bei einer Reiseführerfunktion. In weiteren Ausführungen ist auch eine Verwendung für eine Notizfunktion, für eine Adressdatenverwaltung oder für eine Internet-Funktionalität möglich. Bevorzugt kann die übertragene Nachricht auch für eine Telefonfunktion, eine SMS-Funktion oder eine E-Mail-Funktion verwendet werden. Im Folgenden ist die Erfindung am Beispiel einer Fahrerinformationsvorrichtung erläutert, die eine Fahrzeugnavigationsfunktion aufweist.

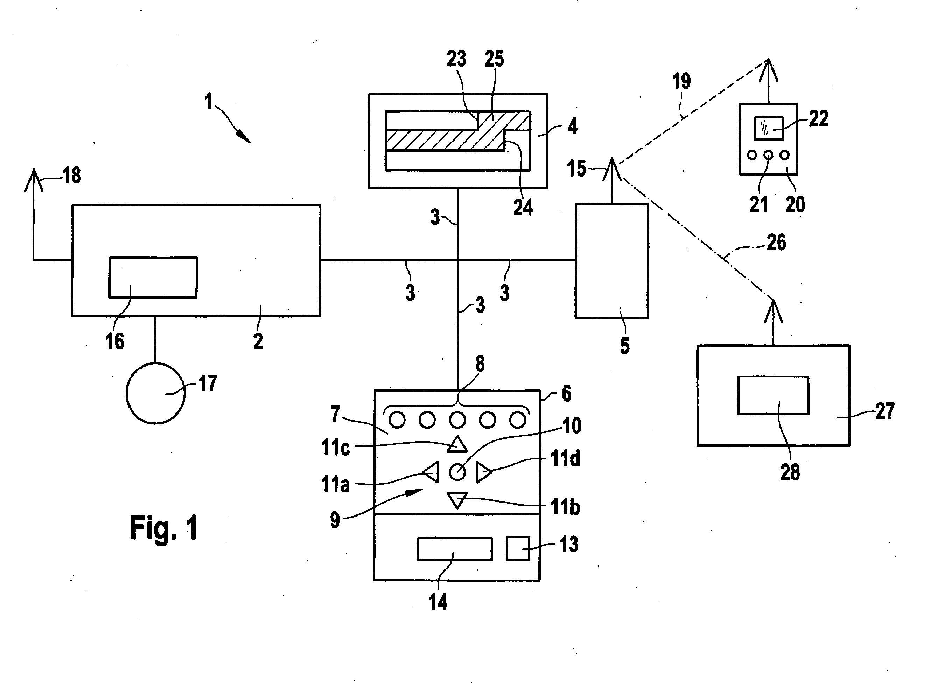

Figur 1 zeigt eine erfindungsgemäße Fahrerinformationsvorrichtung 1, die eine Navigationsvorrichtung 2 aufweist. Über eine Datenschnittstelle 3 ist die Navigationsvorrichtung mit einer Anzeige 4, mit einer Funkempfangseinheit 5 und mit einer Steuereinheit 6 verbunden. Die Steuereinheit 6 weist eine Eingabefläche 7 auf, die bevorzugt einzelne Schaltelemente 8 sowie Steuerungselemente 9 aufweist. In dem hier dargestellten Ausführungsbeispiel weisen die Steuerungselemente 9 Pfeiltasten 11a, 11b, 11c, 11d auf, die insbesondere zur Steuerung einer Anzeigemarke in der Anzeige 4 dienen. Ferner ist eine Eingabetaste 10 vorgesehen, mit der eine insbesondere mit der Anzeigemarke vorgenommene Auswahl bestätigt werden kann. Die Steuereinheit 6 weist ferner eine Recheneinheit 13 zur Steuerung der Fahrerinformationsvorrichtung 1 sowie einen Speicher 14 auf. Mit der Steuereinheit 6 können weitere Fahrzeugsysteme verbunden sein, so dass die Steuereinheit 6 als Klimasteuerungseinheit, als Steuerungseinheit für eine Radioempfangseinheit, als eine Steuerungseinheit für einen Fahrzeugcomputer und für weitere Einrichtungen, insbesondere für Komforteinrichtungen, im Fahrzeug verwendbar ist. Insbesondere kann auch die Funkempfangseinheit 5 von der Steuereinheit 6 gesteuert werden. Die Funkempfangseinheit 5 ist in einer ersten Ausführungsform als ein Mobilfunkgerät ausgebildet, das über eine bevorzugt an der Fahrzeugaußenseite angeordnete Antenne 15 eine Funkverbindung zu einem Funkübertragungsnetz herstellen kann. Z.B. ist hierdurch eine Verbindung zu einem GSM-Telefonnetz oder zu einem UMTS-Netz möglich. In einer weiteren Ausführungsform kann aber auch eine mobile Recheneinheit, Z.B. ein PDA oder ein Mobiltelefon mit Zusatzfunktionen, über drahtgebundene oder drahtlose Schnittstelle mit der Fahrerinformationsvorrichtung 1 zur Informationsübertragung verbunden werden.

Die Anzeige 4 ist bevorzugt als eine Flüssigkristallanzeige ausgeführt und ist z.B. in der Mittelkonsole des Fahrzeugs angeordnet. Die Anzeige 4 dient z.B. der Ausgabe von Fahranweisungen, die von der Navigationsvorrichtung 2 ausgegeben werden. Hierzu weist die Navigationsvorrichtung 2 eine Recheneinheit 16 auf, die eine Fahrtroute von einer aktuellen Fahrzeugposition zu einem eingegebenen Fahrziel unter Rückgriff auf einen Speicher 17 bestimmt. Der Speicher 17 ist insbesondere als ein Datenträgerlaufwerk mit einem eingelegten Datenträger, z.B. einer CD-ROM, einer Speicherkarte oder einer Festplatte ausgelegt. Der Speicher 17 fungiert insbesondere als ein Ortsdaten- und Kartendatenspeicher. Um die aktuelle Position zu ermitteln, weist die Navigationsvorrichtung 2 eine Ortungseinrichtung 18 auf, die z.B. als eine Satellitenortungseinrichtung ausgeführt ist.

Das Fahrziel kann herkömmlich mittels der Eingabefläche 7 durch einen Benutzer eingegeben werden. In der erfindungsgemäßen Ausführung erhält jedoch die Funkempfangseinheit 5 über eine Funkverbindung 19 eine Nachricht von einem Telefon 20, das z.B. als ein Mobiltelefon ausgeführt ist. Das Telefon 20 weist eine Eingabeeinheit 21 und eine Anzeigeeinheit 22 auf, so dass ein Benutzer des Telefons 20 durch Zusammenwirken der Eingabeeinheit 21 und der Anzeigeeinheit 22 auf dem Telefon 20 eine Textnachricht erstellen kann. Die Textnachricht wird nun durch den Benutzer über die Funkverbindung 19 an die Funkempfangseinheit 5 übertragen. Die Nachricht kann auch auf andere Weise in die Funkempfangseinheit übertragen werden. Z.B. kann die Nachricht auch über eine zweite Funkverbindung 26 von einem an das Internet angeschlossenen, externen Rechner 27 an die Funkempfangseinheit 5 übertragen werden. Somit können auch E-Mail-Nachrichten an die Funkempfangseinheit 5 übertragen werden und in der Anzeige 4 dargestellt werden. Ferner kann auch ein Inhalt aus dem Internet abgerufen werden, z.B. eine in der Sprache HTML verfasste sogenannte Internetseite. Diese kann neben Textinformationen auch z.B. graphische Informationen umfassen.

Die empfangene Nachricht wird z.B. von der Funkempfangseinheit 5 ausgewertet und in der Anzeige 4 dargestellt. Die Nachricht wird zeilenweise in der Anzeige 4 in Textform dargestellt. Beispielhaft ist in der Figur 1 eine Nachricht gezeigt, die über drei Zeilen vollständig dargestellt wird. Ein Benutzer der Fahrerinformationsvorrichtung 1 möchte nun einen Teil der angezeigten Nachricht als Eingabe für eine weitere Funktion des Informationssystems, z.B. für die Navigationsvorrichtung 2 verwenden. Hierzu positioniert er eine Eingabemarke 23 an eine erste Position in der Anzeige 4 mittels der Pfeiltasten 11a, 11b, 11c, 11d. Nach der Positionierung betätigt er die Eingabetaste 10. Hierdurch wird die Position der Eingabemarke 23 festgehalten. Anschließend bewegt er die Position der Eingabemarke 24 mittels der Pfeiltasten an eine zweite Position in der Anzeige 4 und betätigt erneut die Eingabetaste 10. Hierdurch wird der schraffierte Bereich 25 in der Fläche der Anzeige 4 markiert. Bevorzugt wird hierbei eine Kopie des markierten Bereiches in dem Speicher 14 der Steuereinheit 6 abgelegt. Der Benutzer der Fahrerinformationsvorrichtung 1 kann nun eine Funktion auswählen, für die der markierte Bereich 25 als Eingabe verwendet werden soll.

Die Weiterverarbeitung des ausgewählten, markierten Teils der Nachricht kann z.B. nun in der Weise erfolgen, dass ein Fahrer über die Eingabefläche 7 zunächst eine Navigationsfunktion aufruft und anschließend den Text des markierten Bereichs als Fahrzieleingabe zur Berechnung einer Fahrtroute zu dem Fahrziel auswählt. Die in dem Speicher 14 abgelegte Textinformation wird über die Datenschnittstelle 3 nun an die Navigationsvorrichtung 2 übertragen. Die Recheneinheit 16 der Navigationsvorrichtung 2 vergleicht die übertragenen Textinformationen mit Ortsdaten, die in dem Speicher 17 abgelegt sind. In einer ersten Ausführungsform wählt ein Benutzer einen kompletten Adressdatensatz aus der in der Anzeige 4 angezeigten Nachricht aus. Dieser umfasst einen Ort, der gegebenenfalls durch eine Postleitzahl eindeutig gekennzeichnet ist und eine Straße, z.B. die Information "Strandpromenade 18, 12345 Isernburg". Die Recheneinheit 16 kann dieser Ortsinformation eine eindeutige geografische Position in der in dem Speicher 17 abgelegten Karte zuordnen. Damit ist eine Routenberechnung zu dem Fahrziel möglich.

In einer weiteren Ausführungsform können aber auch allgemeinere Informationen, wie z.B. "Hotel Post, Stuttgart" verarbeitet werden. Hierbei muss durch die Recheneinheit 16 unter Zugriff auf gespeicherte Informationen in dem Speicher 17 zunächst eine Adresse oder unmittelbar eine geografische Position des Hotels ermittelt werden. In gleicher Weise können auch Bezeichnungen von Sehenswürdigkeiten oder anderen besonderen Positionen, wie z.B. Museen, Bahnhöfen, Flughäfen, öffentlichen Einrichtungen eingegeben werden. Nicht unbedingt muss die Bezeichnung der Sehenswürdigkeit mit einer möglicherweise auch unvollständigen Ortsinformation in der Nachricht verknüpft sein. Gegebenenfalls ist allein aus einem angegebenen Namen eine Position eindeutig zuordbar, z.B. bei Sehenswürdigkeiten wie z.B. dem Schloss Neuschwanstein. Wird dagegen z.B. nur "Hotel Post" in der Nachricht übermittelt und von einem Benutzer ausgewählt, so gibt es eine solche Einrichtung möglicherweise in mehreren Städten. In einer bevorzugten Ausgestaltung wird daher nach weiteren Informationen in dem ausgewählten Bereich der Nachricht gesucht. Hierbei können auch mit der Nachricht verknüpfte Informationen herangezogen werden, wie z.B. die Telefonnummer eines Absenders der Kurznachricht. Lässt sich anhand der Telefonnummer ein Ortsnetz zuordnen, könnte dies ein Indiz sein, in welcher Stadt sich das ausgewählte Fahrziel befindet. Unter Berücksichtigung der Ortsvorwahl kann dem Benutzer nun ein Vorschlag angeboten werden. Ist die Information z.B. aus dem Ortsnetz Stuttgart verschickt worden, so wird dies anhand der Ortsvorwahl 0711 festgestellt. Der Benutzer kann nun gefragt werden, ob er zu demjenigen "Hotel Post" in der Stadt Stuttgart fahren möchte. Ist keine eindeutige Identifizierung möglich, so muss der Benutzer die vorhandene Eingabe entweder ergänzen oder selbst eine Information vollständig neu eingeben.

In einem ersten Ausführungsbeispiel wählt der Benutzer einen bestimmten Teil einer Nachricht aus, um die Eingabe durchzuführen. Bei der Fahrzieleingabe wird er z.B. die Auswahl auf die Adressangabe begrenzen. Lautet die Nachricht z.B. "Hallo, wir treffen uns zu meiner Geburtstagsfeier in meinem Strandhaus in 12345 Isernburg, Strandpromenade 18", so wird ein Benutzer lediglich die Adressinformation "12345 Isernburg, Strandpromenade 18" markieren und als Fahrziel eingeben. Bevorzugt erkennt die Navigationsvorrichtung hierbei, ob es sich bei den eingegebenen Wörtern jeweils um eine Ortseingabe eines Wohnortes oder um eine Straßenangabe handelt. In einer weiteren Ausführungsform kann der Benutzer auch die gesamte Nachricht eingeben. Die Navigationsvorrichtung 2 wird dann den übertragenen Text daraufhin untersuchen, ob sich hierin Ortsinformationen auffinden lassen. Falls ja, wird der ermittelte Ort als Fahrziel eingegeben. Falls nein, wird eine Fehlermeldung ausgegeben. Ist eine Zuordnung nicht eindeutig möglich, so wird wenigstens ein Vorschlag erstellt und der Benutzer wird gefragt, ob er mit einem der angegebenen Vorschläge einverstanden ist oder ob er eine Korrektur wünscht.

Um den Vergleich durchzuführen, werden die einzelnen Wörter des Textes mit Einträgen in der Ortsdatenbank in dem Speicher 17 verglichen. In einer weiteren Ausführungsform kann für den Fall, dass entweder kein Speicher mitgeführt wird oder eine gewünschte Information auf einem mitgeführten Speicher 17 nicht vorhanden ist, eine zweite Funkverbindung 26 zu einem externen Rechner 27 aufgebaut werden. Bei dieser Ausführungsform wird der ausgewählte Teil der Textnachricht an den externen Rechner 27 übertragen, der einen entsprechenden Vergleich mit einem Ortsnamenspeicher 28 durchführt und einen ermittelten Ort oder Vorschläge für mögliche Orte bei einer nicht eindeutigen Ortsbestimmung an die Navigationsvorrichtung 2 zurück übermittelt.

In einer weiteren Ausführungsform wird die Fahrerinformationsvorrichtung 1 als ein Reiseführer verwendet, bei dem zu eingegebenen Orten und Einrichtungen Informationen in der Anzeige 4 ausgegeben werden. Hierzu wird entsprechend der Eingabe eines Fahrziels bei der Navigationsfunktion wenigstens ein Teil einer in der Anzeige 4 dargestellten Textnachricht ausgewählt. In der hier gezeigten Ausführungsform ist die Reiseführerfunktionalität in die Navigationsvorrichtung 2 integriert. Anhand eines Vergleiches des ausgewählten Teils der Nachricht wird unter Zugriff auf einen Ortsregister in dem Speicher 17 ein Ort ermittelt. In einer ersten Ausführungsform sind zu diesem Ort weitere Informationen in dem Speicher 17 abgelegt. In einer weiteren Ausführungsform können auch von dem externen Rechner 27 zusätzliche Informationen über die zweite Funkverbindung 26 abgerufen werden, z.B. aus dem Internet. Die Informationen werden in der Anzeige 4 ausgegeben.

In einer weiteren Ausführungsform können auch unmittelbar auswählbare Adressen oder z.B. Verweise auf Internet-Adressen ausgewählt werden. Diese können unmittelbar an die Funkempfangseinheit 5 weitergegeben werden, so dass von den genannten Adressen Informationen abgerufen bzw. eine Funkverbindung zu einer angegebenen Adresse aufgebaut wird. Hierzu können die dargestellten Adressen auch Telefonnummern sein. Eine Eingabe erfolgt dadurch, dass zunächst die gewünschte Adresse markiert und anschließend über die Eingabefläche 7 die gewünschte Funktionalität, also z.B. der Aufbau einer Internetverbindung bzw. der Aufbau einer Telefonverbindung gestartet wird. Auch in diesem Fall kann in einer weiteren Ausführungsform vom Benutzer über die Pfeiltasten und die Eingabetaste 10 die gesamte Nachricht ausgewählt werden. Wird z.B. über die Eingabefläche 7 die Telefonfunktion aufgerufen und wird eine Nachricht aufgerufen, so wird überprüft, ob in der Textnachricht eine Telefonnummer enthalten ist. Ist dies der Fall, so wird automatisch nach Auswahl der Nachricht eine Telefonverbindung zu der angegebenen Nummer aufgebaut.

In einer weiteren Ausführungsform können auch Informationen in anderen Datenformaten oder in Misch-Formaten übertragen und ausgegeben werden, z.B. als Grafik-Daten. Ein Benutzer kann die Grafik-Daten markieren und ebenso wie Informationen in Textform in eine andere Funktion zur Verarbeitung eingeben. Z.B. können Kartendaten mit einem markierten Fahrziel als eine Grafik zur weiteren Auswertung übermittelt werden. In eine solche Karte können aber auch Ortsbezeichnungen eingetragen sein. Mit einer entsprechenden Routine zur Buchstabenerkennung kann somit eine Ortsbezeichnung auch aus einer im Grafikformat vorliegenden Nachricht ermittelt und für eine Fahrzieleingabe oder eine Reiseführerfunktion als Eingabe verwendet werden. In gleicher Weise können z.B. auch Audio-Daten in geeigneter Weise markiert, analysiert, von der Fahrerinformationsvorrichtung 1 verstanden und anschließend weiterverarbeitet werden.

In dem Speicher 14 ist wenigstens ein Teil einer ausgewählten Nachricht speicherbar. Dieser bleibt in einer bevorzugten Ausführungsform in dem Speicher 14 so lange gespeichert, bis eine neue Auswahl einer Nachricht oder eines Nachrichtenteils erfolgt. Daher kann z.B. zunächst für die Reiseführerfunktionalität eine Auswahl erfolgen, z.B. für die Texteingabe "Deutsches Museum". Anschließend kann die gleiche Eingabe dazu verwendet werden, das Deutsche Museum als Fahrziel in die Navigationsvorrichtung 2 einzugeben.

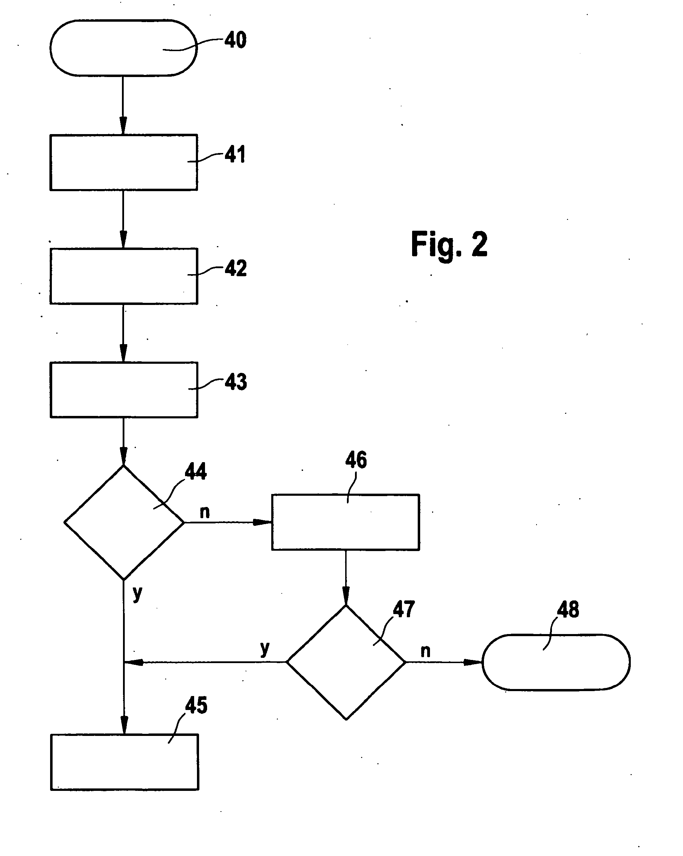

In der Figur 2 ist ein erfindungsgemäßer Verfahrensablauf dargestellt. Das Verfahren beginnt mit einem Initialisierungsschritt 40, wenn eine Nachricht an der Funkempfangseinheit 5 eintrifft und diese in der Anzeige 4 dargestellt wird, z.B. eine SMS-Kurznachricht. Ihm steht es gleich, wenn ein Benutzer eine bereits eingegangene Nachricht zur Anzeige in der Anzeige 4 über die Eingabefläche 7 aufruft, so dass sie in der Anzeige 4 dargestellt wird. Bei einer Nachricht in Textform werden z.B. entsprechende Buchstabenfolgen, Ziffern, Sonderzeichen oder andere Schriftzeichen angezeigt. Insbesondere kann ein Benutzer auch durch eine Liste von mehreren Nachrichten navigieren, um zunächst eine Nachricht für eine entsprechende Eingabe auszuwählen. Hieran schließt sich ein Auswahlschritt 41 des Benutzers an. In dem Auswahlschritt 41 wählt der Benutzer entweder einen genau bezeichneten Teil der Nachricht oder in einer weiteren Ausführungsform auch die gesamte Nachricht für eine Eingabe aus. In einem anschließenden Zuweisungsschritt 42 wählt der Benutzer diejenige Funktion aus, für die eine ausgewählte Nachricht bzw. ein ausgewählter Nachrichtenteil als Eingabe verwendet werden soll. Diese Auswahl erfolgt z.B. entweder durch Drücken einer der Funktion zugeordneten Taste oder mittels einer Menüsteuerung, z.B. über die Pfeiltasten 11 und die Eingabetaste 10. Hierbei kann die Nachricht in der Anzeige 4 auch verschwinden. Der Fahrer wählt z.B. aus einem Menü der Fahrerinformationsvorrichtung die Funktion "Navigation" und "Fahrziel eingeben" aus. Durch eine besondere Eingabe, z.B. durch ein Betätigen einer hierfür vorgesehenen besonderen Taste, gegebenenfalls aber auch automatisch, wird nun der in den Speicher 14 kopierte Teil der in der Anzeige dargestellten Nachricht für die Eingabe verwendet. In einer besonderen Ausführungsform kann die besondere Eingabe auch durch eine andere spezielle Eingabe des Benutzers, z.B. durch ein Eingeben einer speziellen Tastenkombination, ausgelöst werden. Dies könnte z.B. ein gleichzeitiges Drücken der Eingabetaste 10 und einer Pfeiltaste 11, z.B. des Pfeils 11a nach links sein. In einem hieran anschließenden Ermittlungsschritt 43 wird von der aktivierten Funktion eine für die jeweilige Funktion sinnvolle Eingabe aus dem übermittelten Nachrichtenteil bzw. aus der Gesamtnachricht ermittelt. Wird z.B. eine Adressinformation mit Telefonnummer als Nachricht übermittelt, so wird die Navigationsvorrichtung die angegebene Adressinformation verwenden, während eine Telefonfunktion vielmehr die genannte Telefonnummer verwenden wird. In einem anschließenden Prüfschritt 44 wird überprüft, ob eine eindeutige Zuordnung möglich ist, d.h. ob eine mögliche Eingabe aus der Textnachricht eindeutig ermittelbar ist. Ist dies der Fall, so wird in einem Verarbeitungsschritt 45 die aus der Textnachricht gewonnene Eingabe-Information verarbeitet. So wird z.B. nach einer Zuweisung einer Ortskoordinate zu dem in der Textnachricht genannten Ort eine Fahrtroute zu der Ortskoordinate berechnet. Während ein Ort auf verschiedene Weise eindeutig gekennzeichnet sein kann, durch seine Ortskoordinate in einem Straßennetz, durch seine Adresse oder einfach durch eine Namensbezeichnung, wird für die Navigation die Ortskoordinate in einem zur Verfügung stehenden Straßennetz benötigt.

Ist eine eindeutige Zuordnung nicht möglich, so z.B. bei einer mehrdeutigen Ortseingabe, so werden einem Benutzer in einem Vorschlagsschritt 46 eine oder mehrere Alternativen angeboten, aus denen er auswählen kann. Wird z.B. der Ortsname "Neustadt" in der Textnachricht genannt, so wird der Benutzer gefragt, ob er Neustadt in Holstein oder Neustadt im Schwarzwald meint. In einem zweiten Prüfschritt 47 wird geprüft, ob der Benutzer einen der Vorschläge ausgewählt hat und ob somit nun eine Verarbeitung möglich ist. Ist dies der Fall, so wird zu dem Verarbeitungsschritt 45 verzweigt. Ist dies nicht der Fall, so wird zu einem Endschritt 48 verzweigt und eine Fehlermeldung wird ausgegeben. Eine Extraktion einer für die gewünschte Funktion verwertbaren Eingabe aus der Nachricht ist dann nicht möglich. Ein Benutzer muss nun, wenn er eine Funktion mit einer bestimmten Eingabe aufrufen will, die Eingabe selbst vornehmen. Dies kann z.B. dann auftreten, wenn in der Textnachricht Rechtschreibfehler vorhanden sind, die von der Funktion der Fahrerinformationsvorrichtung nicht aufgelöst werden können. In einem solchen Fall kann in einer bevorzugten Ausführungsform der Benutzer den Rechtschreibfehler manuell korrigieren und den geänderten Text für eine Eingabe in die Fahrerinformationsvorrichtung erneut auswählen.

Textnachrichten, die von der Fahrerinformationsvorrichtung 1 verarbeitet werden, können dabei sowohl von dem Benutzer selbst, aber auch von einem Dritten übersandt werden. Ferner kann der Benutzer auch über eine geeignete Schnittstelle einen Dritten dazu veranlassen, ihm entsprechend Informationen zu senden. So können z.B. touristische Informationen von einer Zentrale abgefragt und an das Fahrzeug zur Weiterverarbeitung im Fahrzeug übersendet werden. Aus dem übermittelten Text kann der Fahrer das Fahrziel auswählen.

## Patentansprüche

1. Verfahren zur Eingabe in eine Fahrerinformationsvorrichtung, wobei eine Nachricht in Textform an die Fahrerinformationsvorrichtung übertragen und von der Fahrerinformationsvorrichtung empfangen wird, wobei die Nachricht, die zuvor an das Fahrzeug übermittelt wurde, in Textform in einer Anzeige dargestellt wird, wobei wenigstens ein Teil der in Textform in der Anzeige ausgegebenen Nachricht von einem Benutzer ausgewählt wird und wobei der ausgewählte Teil der Nachricht als Eingabe von der Fahrerinformationsvorrichtung weiterverarbeitet wird.

2. Verfahren nach Anspruch 1, **dadurch gekennzeichnet, dass** aus dem ausgewählten Teil der Nachricht ein Ort ermittelt wird.

3. Verfahren nach Anspruch 2, **dadurch gekennzeichnet, dass** zur Ermittlung des Ortes der ausgewählte Teil der Nachricht mit einer Adress- und/oder Ortsdatenbank zur Ermittlung eines geographischen Ortes verglichen wird.

4. Verfahren nach einem der Ansprüche 2-3, **dadurch gekennzeichnet dass** eine Ortsinformation aus Zusatzinformationen zu der Nachricht ermittelt wird.

5. Verfahren nach einem der Ansprüche 2-4, **dadurch gekennzeichnet, dass** die Fahrerinformationsvorrichtung eine Fahrtroute zu dem ermittelten Ort berechnet.

6. Verfahren nach einem der vorherigen Ansprüche, **dadurch gekennzeichnet, dass** die Nachricht von außerhalb des Fahrzeugs an die Fahrerinformationsvorrichtung übertragen wird.

7. Verfahren nach einem der vorherigen Ansprüche, **dadurch gekennzeichnet, dass** die Nachricht als eine SMS-Kurznachricht, als eine E-Mail oder als eine Internet-Seite übermittelt wird.

8. Verfahren nach einem der vorherigen Ansprüche, **dadurch gekennzeichnet, dass** die Auswahl derart erfolgt, dass der auszuwählende Teil der Nachricht zunächst in der Anzeige markiert wird und anschließend die Markierung durch eine weitere Eingabe bestätigt wird.

9. Verfahren nach Anspruch 8, **dadurch gekennzeichnet, dass** eine Bestätigung der Auswahl durch eine vorgegebene Taste oder eine Eingabe einer vorgegebenen Tastenkombination erfolgt.

10. Verfahren nach einem der vorherigen Ansprüche, **dadurch gekennzeichnet, dass** der ausgewählte Teil der Nachricht nach einer Eingabe für eine erste Funktion der Fahrerinformationsvorrichtung für wenigstens eine weitere Funktion der Fahrerinformationsvorrichtung verwendet werden kann.

## Claims

1. Method for providing input into a driver information apparatus, wherein a message is transmitted in text form to the driver information apparatus and is received from the driver information apparatus, wherein the message which has been previously transmitted to the vehicle is displayed in text form on a display, wherein at least some of the message which is output in text form on the display is selected by a user, and wherein the selected part of the message is further processed as an input by the driver information apparatus.

2. Method according to Claim 1, **characterized in that** a location is determined from the selected part of the message.

3. Method according to Claim 2, **characterized in that**, in order to determine the location, the selected part of the message is compared with an address database and/or location database for the determination of a geographic location.

4. Method according to one of Claims 2-3, **characterized in that** location information is determined from the information which is additional to the message.

5. Method according to one of Claims 2-4, **characterized in that** the driver information apparatus calculates a route to the determined location.

6. Method according to one of the preceding claims, **characterized in that** the message is transmitted to the driver information apparatus from outside the vehicle.

7. Method according to one of the preceding claims, **characterized in that** the message is transmitted as an SMS message, as an e-mail or as an Internet page.

8. Method according to one of the preceding claims, **characterized in that** the selection is made in such a way that the part of the message that is to be selected is firstly displayed on the display and the marking is then confirmed by a further input.

9. Method according to Claim 8, **characterized in that** the selection is confirmed by means of a predefined pushbutton key or inputting of a predefined pushbutton key combination.

10. Method according to one of the preceding claims, **characterized in that**, after inputting for a first function of the driver information apparatus, the selected part of the message can be used for at least one further function of the driver information apparatus.

## Revendications

1. Procédé d'introduction de données dans un dispositif d'information d'un conducteur, dans lequel un message est transmis sous forme de texte au dispositif d'information du conducteur et est reçu par le dispositif d'information du conducteur, le message qui a été précédemment transmis au véhicule étant représenté sous forme de texte sur un affichage, au moins une partie du message présenté sous forme de texte sur l'affichage étant sélectionnée par l'utilisateur, la partie sélectionnée du message étant transformée en données d'introduction par le dispositif d'information du conducteur.

2. Procédé selon la revendication 1, **caractérisé en ce qu'**une destination est déterminée à partir de la partie sélectionnée du message.

3. Procédé selon la revendication 2, **caractérisé en ce que** pour déterminer la destination, la partie sélectionnée du message est comparée à une banque de données d'adresses et/ou de destinations pour déterminer un site géographique.

4. Procédé selon l'une des revendications 2 à 3, **caractérisé en ce qu'**une information de destination est déterminée à partir d'informations supplémentaires au message.

5. Procédé selon l'une des revendications 2 à 4, **caractérisé en ce que** le dispositif d'information du conducteur calcule un itinéraire jusqu'à la destination déterminée.

6. Procédé selon l'une des revendications précédentes, **caractérisé en ce que** le message est transmis au dispositif d'information du conducteur depuis l'extérieur du véhicule.

7. Procédé selon l'une des revendications précédentes, **caractérisé en ce que** le message est transmis sous la forme d'un bref message sms, d'un courriel ou d'une page internet.

8. Procédé selon l'une des revendications précédentes, **caractérisé en ce que** la sélection est réalisée de telle sorte que la partie du message à sélectionner est d'abord repérée dans l'affichage, le repérage étant ensuite confirmé par une autre introduction.

9. Procédé selon la revendication 8, **caractérisé en ce que** la confirmation de la sélection s'effectue par une touche prédéterminée ou l'introduction d'une combinaison prédéterminée de touches.

10. Procédé selon l'une des revendications précédentes, **caractérisé en ce qu'**après l'introduction d'une commande d'une première fonction du dispositif d'information du conducteur, la partie sélectionnée du message peut être utilisée pour au moins une autre fonction du dispositif d'information du conducteur.
